# EUROPÄISCHE PATENTANMELDUNG

(11) **EP 4 825 537 A1**
(43) Veröffentlichungstag der Anmeldung: **21.10.2026**
(21) Anmeldenummer: 26170872.1
(22) Anmeldetag: 07.04.2026
(51) Int. Cl.: B25J 9/10, B25J 9/00, B25J 19/00, B25J 19/06, F16H 37/06, F16H 57/12

(54) **ROBOTERARM MIT EINEM GETRIEBE, DAS WENIGSTENS ZWEI GETRIEBEEINGANGSGLIEDER AUFWEIST**

(30) Priorität: 17.04.2025 DE 102025115289
(71) Anmelder: KUKA Deutschland GmbH, 86165 Augsburg (DE)
(72) Erfinder: KRUMBACHER, Rainer, 87675 Rettenbach am Auerberg (DE); KLEMENS, Philipp, 89438 Holzheim (DE)
(74) Vertreter: Dorow, Florian

(57) **Zusammenfassung**

Die Erfindung betrifft einen Roboterarm (2), aufweisend mehrere Glieder (3) und die Glieder (3) gegeneinander verstellbar verbindende Gelenke (4), wobei ein die kinematische Kette der Glieder (3) beginnendes erstes Glied (3.1) des Roboterarms (2) ein Grundgestell (5) des Roboterarms (2) bildet und ein dem Grundgestell (5) in der kinematischen Kette der Glieder (3) unmittelbar folgendes zweites Glied (3.2) ein Karussell (6) des Roboterarms (2) bildet und das Karussell (6) an dem Grundgestell (5) um eine das erste Gelenk (4.1) des Roboterarms (2) bildende vertikale Drehachse (D1) drehbar angetrieben gelagert ist, und zwar mittels eines Wälzlagers (7), eines Getriebes (8) und einer Antriebsvorrichtung (1), wobei das Getriebe (8) wenigstens ein erstes Getriebeeingangsglied (9.1) aufweist, an das ein erster Antrieb (1.1) angeschlossen ist und wenigstens ein zweites Getriebeeingangsglied (9.2) aufweist, an das ein zweiter Antrieb (1.2) angeschlossen ist, wobei sowohl das erste Getriebeeingangsglied (9.1) als auch das zweite Getriebeeingangsglied (9.2) mit einem gemeinsamen Abtriebsglied (10) kämmen, über das die von dem wenigstens einen ersten Antrieb (1.1) und dem wenigstens einen zweiten Antrieb (1.2) in das Getriebe (8) eingeleiteten Drehmomente gemeinsam in das erste Gelenk (4.1) eingeleitet werden, um das Karussell (6) relativ zum Grundgestell (5) zu bewegen.

## Beschreibung

Die Erfindung betrifft einen Roboterarm, aufweisend mehrere Glieder und die Glieder gegeneinander verstellbar verbindende Gelenke, wobei ein die kinematische Kette der Glieder beginnendes erstes Glied des Roboterarms ein Grundgestell des Roboterarms bildet und ein dem Grundgestell in der kinematischen Kette der Glieder unmittelbar folgendes zweites Glied ein Karussell des Roboterarms bildet und das Karussell an dem Grundgestell um eine das erste Gelenk des Roboterarms bildende vertikale Drehachse drehbar angetrieben gelagert ist, und zwar mittels eines Wälzlagers, eines Getriebes und einer Antriebsvorrichtung.

Die EP 2 024 145 B1 beschreibt einen Gelenkroboter mit durch Gelenke verbundenen Robotergliedern und mit an den Gelenken einwirkenden Funktionselementen, wobei zumindest Haltebremsen als Funktionselemente redundant ausgelegt sind, indem neben einer auf eine Antriebswelle eines Antriebsmotors wirkenden Bremse eine unmittelbar auf eine mit der Antriebswelle verbundenen Eingangswelle eines durch den Motor angetriebenen Getriebes wirkende Bremse vorgesehen ist, wobei die Haltebremsen als Funktionselemente zur Sicherheit des Roboters überwacht sind. Der beschriebene Gelenkroboter weist außerdem eine Schwinge auf, der ein erster Motor und ein zweiter Motor mit jeweils einem separaten Getriebe zugeordnet ist, so dass auch diese Antriebselemente doppelt und damit redundant ausgebildet sind.

Aufgabe der Erfindung ist es, einen Roboterarm zu schaffen, an dem die Lagerung und der Antrieb einer ersten vertikalen Drehachse des Roboterarms einerseits besonders leistungsfähig ist und andererseits möglichst einfach und kostengünstig aufgebaut ist.

Die Aufgabe wird gelöst durch einen Roboterarm, aufweisend mehrere Glieder und die Glieder gegeneinander verstellbar verbindende Gelenke, wobei ein die kinematische Kette der Glieder beginnendes erstes Glied des Roboterarms ein Grundgestell des Roboterarms bildet und ein dem Grundgestell in der kinematischen Kette der Glieder unmittelbar folgendes zweites Glied ein Karussell des Roboterarms bildet und das Karussell an dem Grundgestell um eine das erste Gelenk des Roboterarms bildende vertikale Drehachse drehbar angetrieben gelagert ist, und zwar mittels eines Wälzlagers, eines Getriebes und einer Antriebsvorrichtung, wobei das Getriebe wenigstens ein erstes Getriebeeingangsglied aufweist, an das ein erster Antrieb angeschlossen ist und wenigstens ein zweites Getriebeeingangsglied aufweist, an das ein zweiter Antrieb angeschlossen ist, wobei sowohl das erste Getriebeeingangsglied als auch das zweite Getriebeeingangsglied mit einem gemeinsamen Abtriebsglied kämmen, über das die von dem wenigstens einen ersten Antrieb und dem wenigstens einen zweiten Antrieb in das Getriebe eingeleiteten Drehmomente gemeinsam in das erste Gelenk eingeleitet werden, um das Karussell relativ zum Grundgestell zu bewegen.

Das Wälzlager mittels dem das Karussell um die vertikale Drehachse des ersten Gelenks des Roboterarms drehbar an dem Grundgestell gelagert ist, bildet ein Hauptlager des ersten Gelenks des Roboterarms. Das Wälzlager, d.h. das Hauptlager kann beispielsweise ein Kreuzrollenlager sein, welches einen Innenring (Wälzlager-Innenring) und einen Außenring (Wälzlager-Außenring), sowie zwischen dem Innenring und dem Außenring angeordnete Wälzrollen aufweist.

Bei dem erfindungsgemäßen Roboterarm umfasst die Antriebsvorrichtung des ersten Gelenks, d.h. die Antriebsvorrichtung zum angetriebenen Drehen des Karussells relativ zum Grundgestell, wenigstens einen ersten Antrieb und wenigstens einen zweiten Antrieb. Der erste Antrieb und der zweite Antrieb sind dabei derart ausgebildet und konfiguriert, dass sie das konstruktionsbedingt erforderliche Antriebsmoment gemeinsam zur Verfügung stellen. Es handelt sich insoweit nicht um redundante Antriebe, bei denen vorgesehen wäre, dass bei einem technischen Ausfall des einen Antriebs der jeweils betriebsbereit verbleibende andere Antrieb das konstruktionsbedingt erforderliche Antriebsmoment zur Verfügung stellen könnte. Die Antriebsvorrichtung weist erfindungsgemäß somit nicht aus sicherheitstechnische Gründen wenigstens einen ersten Antrieb und wenigstens einen zweiten Antrieb auf, sondern diese sind im Hinblick auf das erfindungsgemäße Getriebe vorgesehen, um das erforderliche Antriebsmoment an wenigstens zwei verschiedenen Stellen in das Getriebe einleiten zu können.

Das Getriebe weist deshalb wenigstens ein erstes Getriebeeingangsglied auf und wenigstens ein zweites Getriebeeingangsglied auf. Insoweit ist jedem Getriebeeingangsglied des Getriebes ein eigener, separater Antrieb zugeordnet. Das Getriebe kann beispielsweise genau zwei Getriebeeingangsglieder aufweisen, die von genau zwei Antrieben angetrieben werden. Alternativ kann das Getriebe beispielsweise auch drei, vier oder mehr Getriebeeingangsglieder aufweisen, die dann von drei, vier oder mehr Antrieben angetrieben werden. Der wenigstens eine erste Antrieb und der wenigstens eine zweite Antrieb leiten ihre Antriebsmomente somit in dasselbe, gemeinsame Getriebe ein.

Innerhalb des Getriebes werden sämtliche über die mehreren Getriebeeingangsglieder eingeleiteten Teildrehmomentströme auf ein einziges gemeinsames Getriebeausgangsglied zusammengeführt. Das einzige gemeinsame Getriebeausgangsglied des Getriebes leitet abschließend das Gesamtdrehmoment in das erste Gelenk des Roboterarms ein, um das Karussell relativ zum Grundgestell drehend anzutreiben.

Das Getriebe weist somit wenigstens eine Getriebestufe auf, welche von dem wenigstens einen ersten Getriebeeingangsglieder, dem wenigstens einen zweiten Getriebeeingangsglieder und dem Getriebeausgangsglied gebildet wird. Das jeweilige Getriebeeingangsglied muss damit nicht notwendigerweise ein aus dem Getriebegehäuse des Getriebes herausgeführtes Getriebeeingangsglied sein. Im selben Sinne muss auch das Getriebeausgangsglied nicht notwendigerweise ein aus dem Getriebegehäuse des Getriebes herausgeführtes Getriebeausgangsglied sein. So kann beispielsweise der erste Antrieb mit seiner ersten Antriebswelle, statt unmittelbar mit dem ersten Getriebeeingangsglied verbunden zu sein, auch mittelbar über eine zusätzliche erste Zwischengetriebestufe oder eine erste Umlenkung verbunden sein. In gleicher Weise kann der zweite Antrieb mit seiner zweiten Antriebswelle, statt unmittelbar mit dem zweiten Getriebeeingangsglied verbunden zu sein, auch mittelbar über eine zusätzliche zweite Zwischengetriebestufe oder eine zweite Umlenkung verbunden sein. Das gemeinsame Abtriebsglied des Getriebes wird jedoch von demselben Verzahnungsglied gebildet, das je nach Bauweise entweder mit dem Grundgestell oder mit dem Karussell fest verbunden ist.

Der erste Antrieb kann im einfachsten Fall von lediglich einem ersten Motor gebildet werden, der eine erste Motorwelle aufweist, an die das erste Getriebeeingangsglied angekoppelt ist. Auch der zweite Antrieb kann im einfachsten Fall von lediglich einem zweiten Motor gebildet werden, der eine zweite Motorwelle aufweist, an die das zweite Getriebeeingangsglied angekoppelt ist.

Alternativ kann der erste Antrieb einen ersten Motor umfassen, der eine erste Motorwelle aufweist, die an einen Eingang eines ersten Vorstufengetriebes angeschlossen ist. Der Ausgang des ersten Vorstufengetriebes bildet dann die erste Antriebswelle des ersten Antriebs, die an das erste Getriebeeingangsglied des Getriebes angeschlossen sein kann. Auch der zweite Antrieb kann einen zweiten Motor umfassen, der eine zweite Motorwelle aufweist, die an einen Eingang eines zweiten Vorstufengetriebes angeschlossen ist. Der Ausgang des zweiten Vorstufengetriebes bildet dann die zweite Antriebswelle des zweiten Antriebs, die an das zweite Getriebeeingangsglied des Getriebes angeschlossen sein kann.

Das jeweilige Vorstufengetriebe kann beispielsweise ein Planetengetriebe, ein Zykloidgetriebe oder ein Spannungswellengetriebe sein. Das jeweilige Vorstufengetriebe kann auch als Kompaktgetriebe bezeichnet werden.

Im Falle, dass an dem Karussell genau ein erster Antrieb und genau ein zweiter Antrieb vorgesehen ist, können die beiden Antriebe auf dem Karussell auf verschiedene Weise angeordnet sein. So kann in einer ersten Variante vorgesehen sein, dass die beiden Antriebe bezüglich der Drehhachse des ersten Gelenks des Roboterarms genau gegenüberliegend angeordnet sind, und zwar in einer solchen Ausrichtung, dass eine virtuelle kürzeste Verbindungsgerade zwischen der Antriebsachse des ersten Antriebs und der Antriebsachse des zweiten Antriebs parallel versetzt zur Drehachse des unmittelbar folgenden zweiten Gelenks des Roboterarms ausgerichtet ist. Um das zweite Gelenk ist insoweit eine Schwinge des Roboterarms relativ zum Karussell schwenkbar gelagert.

In einer anderen, zweiten Variante kann vorgesehen sein, dass die beiden Antriebe bezüglich der Drehhachse des ersten Gelenks des Roboterarms genau gegenüberliegend angeordnet sind, und zwar in einer solchen Ausrichtung, dass eine virtuelle kürzeste Verbindungsgerade zwischen der Antriebsachse des ersten Antriebs und der Antriebsachse des zweiten Antriebs senkrecht zur Drehachse des unmittelbar folgenden zweiten Gelenks des Roboterarms ausgerichtet ist.

Bei Verwendung eines ersten Antriebs und eines separat ansteuerbaren zweiten Antriebs, insbesondere bei elektrischen Antrieben, kann dem Roboterarm eine Steuervorrichtung zugeordnet sein, die ausgebildet und eingerichtet ist, den ersten Antrieb derart unterschiedlich zum zweiten Antrieb anzusteuern, so dass abweichende Antriebsmomente des ersten Antriebs und des zweiten Antriebs erzeugt werden, durch die ein aktives Verspannen des gemeinsamen Getriebeausgangsglieds erzielt werden kann, bei dem die Getriebestufe, welche durch die beiden Getriebeeingangsglieder und das Getriebeausgangsglied gebildet wird, spielfrei eingestellt und angesteuert werden kann.

Das wenigstens eine erste Getriebeeingangsglied leitet ein erstes Teildrehmoment in das Getriebeausgangsglied ein und das wenigstens eine zweite Getriebeeingangsglied leitet ein zweites Teildrehmoment in das Getriebeausgangsglied ein. Von dem Getriebeausgangsglied wird dann die Summe aus dem ersten Teildrehmoment und dem zweiten Teildrehmoment als ein Summenmoment in das erste Gelenk des Roboterarms eingeleitet, um das Karussell relativ zum Grundgestell angetrieben zu bewegen.

Das Getriebe kann als eine Stirnradstufe ausgebildet sein, aufweisend ein als Hohlrad ausgebildetes Abtriebsglied, sowie ein das erste Getriebeeingangsglied bildende erstes Ritzel und ein das zweite Getriebeeingangsglied bildende zweites Ritzel, wobei sowohl das erste Ritzel als auch das zweite Ritzel mit dem gemeinsamen Hohlrad in kämmenden Eingriff stehen.

Das Hohlrad kann beispielsweise eine Außenverzahnung aufweisen, an der sowohl das erste Ritzel als auch das zweite Ritzel kämmen.

In einer speziellen Ausführungsform kann es jedoch vorgesehen sein, dass das Hohlrad eine Innenverzahnung aufweist, an der sowohl das erste Ritzel als auch das zweite Ritzel kämmen. Das erste Ritzel und das zweite Ritzel können demgemäß innerhalb des Hohlrads angeordnet sein. Die Drehachse des ersten Ritzels und die Drehachse des zweiten Ritzels liegen in diesem Fall innerhalb des Wälzkreises des Hohlrades. Die Drehachse des ersten Ritzels und die Drehachse des zweiten Ritzels laufen dabei parallel zur vertikalen Drehachse des ersten Gelenks des Roboterarms, d.h. parallel zur vertikalen Drehachse, um die das Karussell relativ zum Grundgestell dreht.

Das Hohlrad der Stirnradstufe des Getriebes kann einen Innenring des Wälzlagers mit ausbilden, welches das Hauptlager des ersten Gelenks bildet, welches das Karussell drehbar an dem Grundgestell lagert.

Das Wälzlager bildet insoweit das Hauptlager, durch welches das Karussell drehbar an dem Grundgestell gelagert ist. Das Hohlrad der Stirnradstufe des Getriebes und der Innenring des Wälzlager können demgemäß als ein einziges Bauteil hergestellt sein. Dieses Bauteil bildet somit einen Ring, dessen Ringinnenmantelwand das Verzahnungsprofil des Hohlrades der Stirnradstufe des Getriebes trägt und dessen Ringaußenmantelwand die Innenlaufbahn für die Wälzkörper des Wälzlagers trägt.

Indem das Hohlrad der Stirnradstufe des Getriebes einen Innenring des Wälzlagers mit ausbildet, welches das Hauptlager des ersten Gelenks bildet, welches das Karussell drehbar an dem Grundgestell lagert, wird ein besonders kompakter Aufbau geschaffen, der außerdem eine hohe Steifigkeit aufweist. Darüber hinaus wird auch die Montage vereinfacht.

Das Wälzlager kann insbesondere als ein Kreuzrollenlager ausgebildet sein. Wenn das Bauteil eine Ringinnenmantelwand aufweist, die das Verzahnungsprofil des Hohlrades der Stirnradstufe des Getriebes trägt, kann bei dieser Wälzlagerart die Ringaußenmantelwand zur Bildung zweier Innenlaufbahnen für die Rollen des Kreuzrollenlagers eine umlaufende, V-förmige Kerbe mit einem Öffnungswinkel von 90 Grad aufweisen, so dass eine erste Innenlaufbahn durch die eine Kerbenwand gebildet wird und eine zweite Innenlaufbahn durch die andere Kerbenwand gebildet wird. Jede zweite Rolle wälzt somit auf der ersten Innenlaufbahn des Bauteils ab und die anderen Rollen wälzen auf der zweiten Innenlaufbahn des Bauteils ab. In einer solchen Ausführungsform kann vorzugsweise der Außenring des Kreuzrollenlagers in einer geteilten Ausführung hergestellt sein.

Der Innenring des Wälzlagers kann mit dem Grundgestell verbunden sein und ein Außenring des Wälzlagers kann mit dem Karussell verbunden sein. Bei einer solchen Lagerungsart sitzt das Karussell somit haubenartig auf dem Grundgestell auf. In der Ausführungsvariante, bei der das Hohlrad des Getriebes einteilig mit dem Innenring des Wälzlagers ausgebildet ist, ist dann somit auch das Hohlrad des Getriebes mit dem Grundgestell verbunden. Demgemäß können die wenigstens zwei Getriebeeingangsglieder und auch die wenigstens zwei Antriebe auf dem Karussell gelagert sein. Die wenigstens zwei Getriebeeingangsglieder und auch die wenigstens zwei Antriebe sind dann mit dem Karussell mitdrehend ausgebildet, wobei das Hohlrad des Getriebes feststehend ausgebildet ist.

Das Grundgestell kann eine untere Getriebegehäusehälfte des Getriebes bilden und eine Bodenwand des Grundgestells kann dabei eine koaxial zur vertikalen Drehachse des ersten Gelenks angeordnete ringförmige Vertiefung aufweisen, in welche das erste Ritzel und das zweite Ritzel von oben hineinragen und welche einen Aufnahmeraum für Getriebeöl bildet.

Die Vertiefung kann durch eine koaxial zur vertikalen Drehachse verlaufende Außenwand begrenzt sein und durch eine Innenwand begrenzt sein, die von einer Außenmantelwand eines zentralen Doms der Bodenwand des Grundgestells gebildet wird. Der Dom kann eine zentrale Durchgangsöffnung aufweisen, über die beispielsweise Energieleitungen, insbesondere elektrische Leitung hindurchgeführt sein können. Die Außenwand der Vertiefung kann zumindest teilweise oder vollständig von dem Hohlrad des Getriebes bzw. von dem Innenring des Wälzlagers gebildet werden. Zwischen dem Grundgestell und dem Hohlrad des Getriebes bzw. dem Innenring des Wälzlagers kann eine statische Dichtung vorgesehen sein, welche die Vertiefung bzw. den durch die Vertiefung gebildeten Ölraum nach außerhalb des Grundgestells abdichtet.

Die Vertiefung ist demgemäß mit Getriebeöl befüllt und das wenigstens eine erste Ritzel und das wenigstens eine zweite Ritzel tauchen in die Vertiefung ein, bzw. können vollständig innerhalb der Vertiefung liegen. Im Stillstand kann die Vertiefung zumindest teilweise mit dem Getriebeöl gefüllt sein, so dass auch das wenigstens eine erste Ritzel und das wenigstens eine zweite Ritzel zumindest teilweise in das Getriebeöl eintauchen.

Die Bodenwand des Grundgestells bzw. der Bodenwandabschnitt der Vertiefung kann insbesondere abschüssig gestaltet sein, so dass in der Vertiefung vorhandenes Getriebeöl während eines Ölwechsels bevorzugt an eine vorbestimmte Stelle fließen kann, wo es über eine am tiefsten Punkt der Bodenwand liegende Ölablassöffnung aus dem Ölraum des Getriebes herausfließen kann. Das Grundgestell kann demgemäß einen aus der Vertiefung herausführenden Ölablasskanal und eine durch eine Ölablassschraube verschließbare Ölablassöffnung aufweisen.

Das Getriebe kann wenigstens eine dynamische Dichtung oder eine Labyrinth-Dichtung aufweisen, welche in vertikaler Richtung über dem Hohlrad angeordnet ist.

Mit einer solchen Anordnung der dynamischen Dichtung ist sichergestellt, dass die dynamischen Dichtung außerhalb des Füllstandes des Getriebeöls in dem Ölraum der Vertiefung liegt. Die dynamische Dichtung ist somit auch bei Stillstand des Karussells nicht dauerhaft mit dem Getriebeöl beaufschlagt.

Eine erste dynamische Dichtung kann an einem Trägerring ausgebildet sein, welche zwischen dem Karussell und dem Außenring des Wälzlagers zwischengefügt sein kann. Die dynamische Dichtung am Trägerring kann gegen eine Dichtungsfläche am Innenring des Wälzlagers abdichten.

Eine zweite dynamische Dichtung kann einen Spalt zwischen einer durch das Karussell gebildeten oberen Getriebegehäusehälfte des Getriebes und dem Dom des Grundgestells, das eine untere Getriebegehäusehälfte bilden kann, abdichten. Der Dom oder ein mit dem Dom verbundener Rohrstutzen kann sich in vertikaler Richtung durch eine Öffnung in der oberen Getriebegehäusehälfte, d.h. durch das Karussell hindurch nach oben erstrecken. Der Dom oder der mit dem Dom verbundene Rohrstutzen kann dabei eine Außenmantelwand aufweisen, die eine umlaufende Lauffläche für eine Dichtungslippe der zweiten dynamischen Dichtung bildet. Die Öffnung der oberen Getriebegehäusehälfte ist dabei kreisförmig gestaltet und liegt koaxial zur Drehachse des ersten Gelenks des Roboterarm, also der Drehachse, um die das Karussell relativ zum Grundgestell dreht. An der umlaufenden Innenkante der Öffnung im Karussell kann ein Sitz ausgebildet sein, an dem beispielsweise ein Radialwellendichtring angebracht ist.

Das Getriebe kann demgemäß wenigstens eine dynamische Dichtung aufweisen, welche in vertikaler Richtung über dem Wälzlager angeordnet ist.

Der erste Antrieb kann eine erste hohle Antriebswelle aufweisen, welche das erste Getriebeeingangsglied trägt, wobei auch das erste Getriebeeingangsglied als ein erstes hohles Getriebeeingangsglied ausgebildet ist, derart, dass die erste hohle Antriebswelle und das erste hohle Getriebeeingangsglied einen ersten Fluidkanal bilden, der mit einem Ölraum des Getriebes in fluidischer Verbindung steht, so dass Getriebeöl über die erste hohle Antriebswelle und das erste hohle Getriebeeingangsglied hinweg in den Ölraum des Getriebes einleitbar ist.

In einer speziellen Ausführungsform kann der erste Antrieb einen ersten Motor umfassen, der eine erste Motorwelle aufweist, die an einen Eingang eines ersten Vorstufengetriebes angeschlossen ist. In einer ersten Variante kann die erste Motorwelle eine erste hohle Motorwelle sein, die mit einer hohlen Eingangswelle des ersten Vorstufengetriebes fluchtet, so dass die erste hohle Motorwelle zusammen mit der hohlen Eingangswelle die hohle Antriebswelle bildet. In einer zweiten Variante kann die erste Motorwelle versetzt, beispielsweise parallel versetzt zur ersten Eingangswelle des ersten Vorstufengetriebes angeordnet sein, wobei lediglich die erste Eingangswelle des ersten Vorstufengetriebes hohl ausgebildet ist und die hohle Eingangswelle des ersten Vorstufengetriebes lediglich in fluidischer (nicht mechanischer) Verbindung mit der ersten hohlen Ausgangswelle des ersten Vorstufengetriebes die erste hohle Antriebswelle bildet, also ohne die erste Motorwelle. Das erste Vorstufengetriebe weist einen eigenen, separaten ersten Ölraum auf, der im Betrieb des Roboterarms getrennt vom Ölraum des Getriebes (Hauptgetriebes) eingerichtet ist und eine eigene auf das erste Vorstufengetriebe abgestimmte Ölmenge enthält.

Im selben Sinne kann auch der zweite Antrieb einen zweiten Motor umfassen, der eine zweite Motorwelle aufweist, die an einen Eingang eines zweiten Vorstufengetriebes angeschlossen ist. In einer ersten Variante kann die zweite Motorwelle eine zweite hohle Motorwelle sein, die mit einer hohlen Eingangswelle des zweiten Vorstufengetriebes fluchtet, so dass die zweite hohle Motorwelle zusammen mit der hohlen Eingangswelle die hohle Antriebswelle bildet. In einer zweiten Variante kann die zweite Motorwelle versetzt, beispielsweise parallel versetzt zur zweite Eingangswelle des zweiten Vorstufengetriebes angeordnet sein, wobei lediglich die zweite Eingangswelle des zweiten Vorstufengetriebes hohl ausgebildet ist und die hohle Eingangswelle des zweiten Vorstufengetriebes lediglich in fluidischer (nicht mechanischer) Verbindung mit der zweiten hohlen Ausgangswelle des zweiten Vorstufengetriebes die zweite hohle Antriebswelle bildet, also ohne die zweite Motorwelle. Das zweite Vorstufengetriebe weist ebenfalls einen eigenen, separaten zweiten Ölraum auf, der im Betrieb des Roboterarms getrennt vom Ölraum des Getriebes (Hauptgetriebes) und getrennt vom Ölraum des ersten Vorstufengetriebes eingerichtet ist und eine eigene auf das zweite Vorstufengetriebe abgestimmte Ölmenge enthält.

Indem die erste hohle Antriebswelle und das erste hohle Getriebeeingangsglied einen ersten Fluidkanal bilden, der mit einem Ölraum des Getriebes in fluidischer Verbindung steht, so dass Getriebeöl über die erste hohle Antriebswelle und das erste hohle Getriebeeingangsglied hinweg in den Ölraum des Getriebes einleitbar ist, kann das Getriebeöl des ersten Vorstufengetriebes aus dem Ölraum des ersten Vorstufengetriebes abgelassen werden, indem es zunächst in den Ölraum des Getriebes (Hauptgetriebes) eingeleitet wird und von dort aus, beispielsweise zusammen mit dem Getriebeöl des Getriebes über einen weiteren Ölablass des Getriebes, beispielsweise an dem Grundgestell als untere Getriebegehäusehälfte, gemeinsam angelassen wird. Ein Ölablasskanal an der untere Getriebegehäusehälfte kann den Ölablass bilden, der beispielsweise mit einer eigenen Ölablassschraube verschließbar sein kann.

Demgemäß kann das jeweilige Vorstufengetriebe, wie das Getriebe (Hauptgetriebe) ebenfalls ölgeschmiert sein. Insoweit kann das jeweilige Vorstufengetriebe einen eigenen Ölraum aufweisen, der mit Vorstufengetriebeöl gefüllt sein kann.

In gleicher Weise kann somit alternativ oder ergänzend zum ersten Antrieb auch der zweite Antrieb eine zweite hohle Antriebswelle aufweisen, welche das zweite Getriebeeingangsglied trägt, wobei auch das zweite Getriebeeingangsglied als ein zweites hohles Getriebeeingangsglied ausgebildet ist, derart, dass die zweite hohle Antriebswelle und das zweite hohle Getriebeeingangsglied einen zweiten Fluidkanal bilden, der mit einem Ölraum des Getriebes in fluidischer Verbindung steht, so dass Getriebeöl über die zweite hohle Antriebswelle und das zweite hohle Getriebeeingangsglied hinweg in den Ölraum des Getriebes einleitbar ist.

Auch bei dem zweiten Vorstufengetriebe kann das Getriebeöl aus dem Ölraum des zweiten Vorstufengetriebes abgelassen werden, indem es zunächst in den Ölraum des Getriebes (Hauptgetriebes) eingeleitet wird und von dort aus, beispielsweise zusammen mit dem Getriebeöl des Getriebes über den weiteren Ölablass des Getriebes, beispielsweise an dem Grundgestell als untere Getriebegehäusehälfte, gemeinsam abgelassen wird. Der Ölablasskanal an der unteren Getriebegehäusehälfte kann somit auch den Ölablass für das Vorstufengetriebeöl des zweiten Vorstufengetriebes bilden, der beispielsweise mit einer eigenen Ölablassschraube verschließbar sein kann.

Die erste hohle Antriebswelle kann mit dem ersten hohlen Getriebeeingangsglied über ein erstes Trennstück verbunden sein, insbesondere lediglich in fluidischer (nicht mechanischer) Verbindung verbunden sein, welches eine erste Durchlass-Gewindebohrung für eine erste Ölablassschraube aufweist, und die erste Ölablassschraube kann dabei einen ersten Gewindeabschnitt aufweisen, der ausgebildet ist zum Einschrauben der ersten Ölablassschraube in die erste Durchlass-Gewindebohrung des ersten Trennstücks, wobei die erste Ölablassschraube an ihrem ersten Schraubenkopf eine erste Verlängerung aufweist, welche durch die erste hohle Antriebswelle hindurch bis an ein oberes Stirnende der ersten hohlen Antriebswelle geführt ist, wo die erste Verlängerung ein erstes Betätigungsprofil aufweist, das ausgebildet ist zum Aufschrauben und/oder Zuschrauben der ersten Ölablassschraube an dem ersten Trennstück. Statt einer ersten Ölablassschraube und einer ersten Durchlass-Gewindebohrung kann alternativ auch ein erster Ölablass-Stopfen vorgesehen sein, der beispielsweise ein oder mehrere O-Ringe tragen kann, wobei der erste Ölablass-Stopfen in eine erste Passungsbohrung im ersten Trennstück einsteckbar und zum Öffnen daraus abziehbar ist.

Alternativ oder ergänzend kann auch die zweite hohle Antriebswelle mit dem zweiten hohlen Getriebeeingangsglied über ein zweites Trennstück verbunden sein, insbesondere lediglich in fluidischer (nicht mechanischer) Verbindung verbunden sein, welches eine zweite Durchlass-Gewindebohrung für eine zweite Ölablassschraube aufweist, und die zweite Ölablassschraube kann dabei einen zweiten Gewindeabschnitt aufweisen, der ausgebildet ist zum Einschrauben der zweiten Ölablassschraube in die zweite Durchlass-Gewindebohrung des zweiten Trennstücks, wobei die zweite Ölablassschraube an ihrem zweiten Schraubenkopf eine zweite Verlängerung aufweist, welche durch die zweite hohle Antriebswelle hindurch bis an ein oberes Stirnende der zweiten hohlen Antriebswelle geführt ist, wo die zweite Verlängerung ein zweites Betätigungsprofil aufweist, das ausgebildet ist zum Aufschrauben und/oder Zuschrauben der zweiten Ölablassschraube an dem zweiten Trennstück. Statt einer zweiten Ölablassschraube und einer zweiten Durchlass-Gewindebohrung kann alternativ auch ein zweiter Ölablass-Stopfen vorgesehen sein, der beispielsweise ein oder mehrere O-Ringe tragen kann, wobei der zweite Ölablass-Stopfen in eine zweite Passungsbohrung im zweiten Trennstück einsteckbar und zum Öffnen daraus abziehbar ist.

Das Wälzlager, insbesondere als das Hauptlager des ersten Gelenks, welches das Karussell drehbar an dem Grundgestell lagert, kann fettgeschmiert sein und gegen einen Ölraum des Getriebes abgedichtet sein.

Die Abdichtung des Fettraums in dem Wälzlager kann beispielsweise mittels Wellendichtringen erfolgen, die in das Wälzlager integriert sind. Insoweit kann das Wälzlager ein beidseitig abgedichtetes Wälzlager sein. Ein jeweils entsprechender Wellendichtring kann in den Innenring und/oder in den Außenring des Wälzlagers integriert sein. Der Innenraum des fettgeschmierten Wälzlagers ist somit auch gegen den Ölraum des Getriebes abgedichtet.

Das Karussell kann eine obere Getriebegehäusehälfte des Getriebes bilden und eine Deckenwand des Karussells kann dabei einen ersten Öffnungsflansch aufweisen, an dem der erste Antrieb außerhalb des Getriebes befestigt ist, derart, dass das mit dem ersten Antrieb verbundene erste Getriebeeingangsglied in das Getriebe hineinragt. Der erste Antrieb kann hierbei insbesondere eine beschriebene Kombination eines ersten Motors mit einem ersten Vorstufengetriebe sein. Der erste Motor und das erste Vorstufengetriebe können dabei zunächst als kombinierter erster Antrieb vormontiert und mit dem Vorstufengetriebeöl befüllt sein und anschließend gemeinsam an das Karussell montiert werden. Ein Passungssitz des ersten Antriebs kann mit einem entsprechenden Passungsgegensitz am ersten Öffnungsflansch zusammenwirken, um den ersten Antrieb positionsgenau auf das Getriebe aufsetzen, insbesondere an das Abtriebsglied des Getriebes ankoppeln zu können. Das erste Getriebeeingangsglied des Getriebes kann dabei zusammen mit dem ersten Antrieb an dessen erster Antriebswelle bereits vormontiert sein.

Alternativ oder ergänzend kann die Deckenwand des Karussells auch einen zweiten Öffnungsflansch aufweisen, an dem der zweite Antrieb außerhalb des Getriebes befestigt ist, derart, dass das mit dem zweiten Antrieb verbundene zweite Getriebeeingangsglied in das Getriebe hineinragt. Der zweite Antrieb kann hierbei insbesondere eine beschriebene Kombination eines zweiten Motors mit einem zweiten Vorstufengetriebe sein. Der zweite Motor und das zweite Vorstufengetriebe können dabei zunächst als kombinierter zweiter Antrieb vormontiert und mit dem Vorstufengetriebeöl befüllt sein und anschließend gemeinsam an das Karussell montiert werden. Ein Passungssitz des zweiten Antriebs kann mit einem entsprechenden Passungsgegensitz am zweiten Öffnungsflansch zusammenwirken, um den zweiten Antrieb positionsgenau auf das Getriebe aufsetzen, insbesondere an das Abtriebsglied des Getriebes ankoppeln zu können. Das zweite Getriebeeingangsglied des Getriebes kann dabei zusammen mit dem zweiten Antrieb an dessen zweiter Antriebswelle bereits vormontiert sein.

Zwischen dem ersten Antrieb und dem ersten Öffnungsflansch kann eine erste Einstellvorrichtung zwischengefügt sein, welche ausgebildet ist zum Einstellen der relativen Lage der Drehachse des ersten Getriebeeingangsglieds bezüglich des Drehachse des Abtriebsglieds des Getriebes.

Alternativ oder ergänzend kann zwischen dem zweiten Antrieb und dem zweiten Öffnungsflansch eine zweite Einstellvorrichtung zwischengefügt sein, welche ausgebildet ist zum Einstellen der relativen Lage der Drehachse des zweiten Getriebeeingangsglieds bezüglich der Drehachse des Abtriebsglieds des Getriebes.

Die jeweilige erste Einstellvorrichtung und/oder zweite Einstellvorrichtung kann ein Zentrierring oder ein Exzenter sein. So kann während einer Montage des jeweiligen ersten Antriebs und/oder des zweiten Antriebs, der betreffende Antrieb über den Zentrierring oder den Exzenter in den Öffnungsflansch eingesetzt werden und durch Drehen des ersten Antriebs bzw. des zweiten Antriebs der Abstand des jeweiligen auf der Antriebswelle sitzenden Getriebeeingangsglieds bzw. Getriebeeingangszahnrads an die Verzahnung des Getriebeausgangsglieds, insbesondere des Hohlrads individuell angepasst, d.h. eingestellt werden.

Der erste Antrieb kann, wie bereits beschrieben, einen ersten Motor, insbesondere einen ersten elektrischen Motor, und ein erstes Vorstufengetriebe aufweisen, welches die erste Motorwelle des ersten Motors unter Bereitstellung einer Übersetzung ins Langsame mit dem ersten Getriebeeingangsglied verbindet.

In gleicher Weise kann der zweite Antrieb, wie bereits beschrieben, einen zweiten Motor, insbesondere einen zweiten elektrischen Motor, und ein zweites Vorstufengetriebe aufweisen, welches die zweite Motorwelle des zweiten Motors unter Bereitstellung einer Übersetzung ins Langsame mit dem zweiten Getriebeeingangsglied verbindet.

Ein konkretes Ausführungsbeispiel der Erfindung ist in der nachfolgenden Beschreibung unter Bezugnahme auf die beigefügten Figuren näher erläutert. Einzelne Merkmale oder Merkmalskombinationen dieses exemplarischen Ausführungsbeispiels können unabhängig davon, in welchem konkreten Zusammenhang sie erwähnt sind, gegebenenfalls auch einzeln oder in weiteren Kombinationen betrachtet, vorteilhafte Merkmale von alternativen Ausführungsvarianten der Erfindung darstellen.

Es zeigen:
- Fig. 1: eine Seitenansicht eines beispielhaften Roboterarm, aufweisend mehrere Glieder und die Glieder gegeneinander verstellbar verbindende Gelenke, wobei ein die kinematische Kette der Glieder beginnendes erstes Glied des Roboterarms ein Grundgestell des Roboterarms bildet und ein dem Grundgestell in der kinematischen Kette der Glieder unmittelbar folgendes zweites Glied ein Karussell des Roboterarms bildet,
- Fig. 2: eine Schnittdarstellung eines beispielhaften erfindungsgemäßen Grundgestells und Karussells, wobei das Karussell an dem Grundgestell um eine das erste Gelenk des Roboterarms bildende vertikale Drehachse drehbar angetrieben gelagert ist, und zwar mittels eines Wälzlagers, eines erfindungsgemäßen Getriebes und zweier Antriebe,

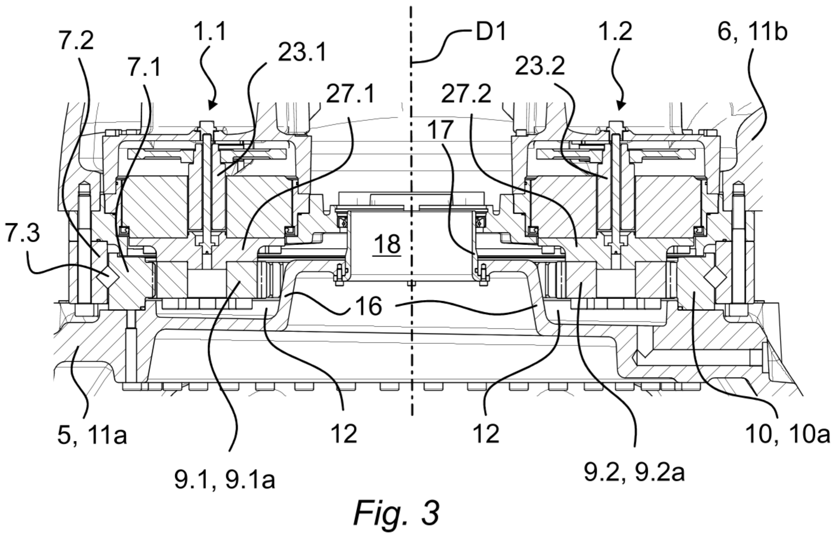

- Fig. 3: eine vergrößerte Teilschnittdarstellung durch das Getriebe gemäß Fig. 2,
- Fig. 4: eine weiter vergrößerte Teilschnittdarstellung durch das Getriebe gemäß Fig. 3 in einem vertikalen Halbschnitt, und
- Fig. 5: eine weiter vergrößerte Teilschnittdarstellung durch das Getriebe gemäß Fig. 3 in einem Bereich eines Ölablasses aus einem der beiden Vorstufengetriebe in das Hauptgetriebe.

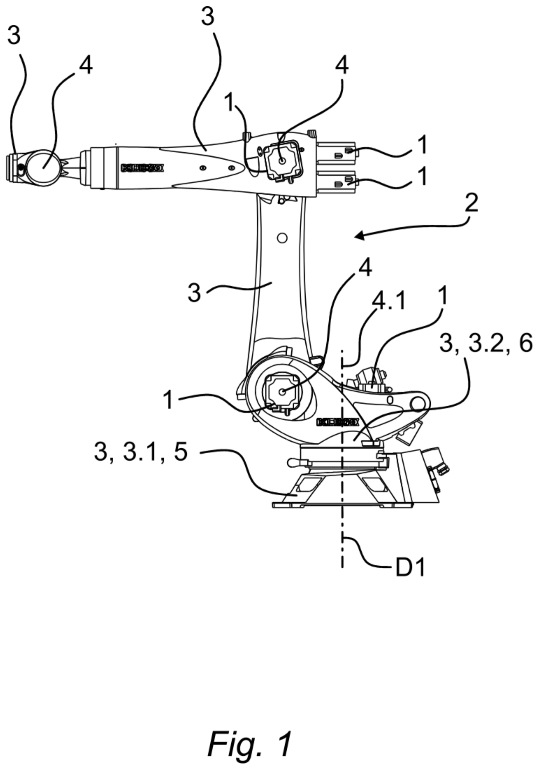

In der Fig. 1 ein beispielhafter Roboterarm 2 dargestellt.

Der Roboterarm 2 weist mehrere Glieder 3 und die Glieder 3 gegeneinander verstellbar verbindende Gelenke 4 auf, wobei ein die kinematische Kette der Glieder 3 beginnendes erstes Glied 3.1 des Roboterarms 2 ein Grundgestell 5 des Roboterarms 2 bildet und ein dem Grundgestell 5 in der kinematischen Kette der Glieder 3 unmittelbar folgendes zweites Glied 3.2 ein Karussell 6 des Roboterarms 2 bildet.

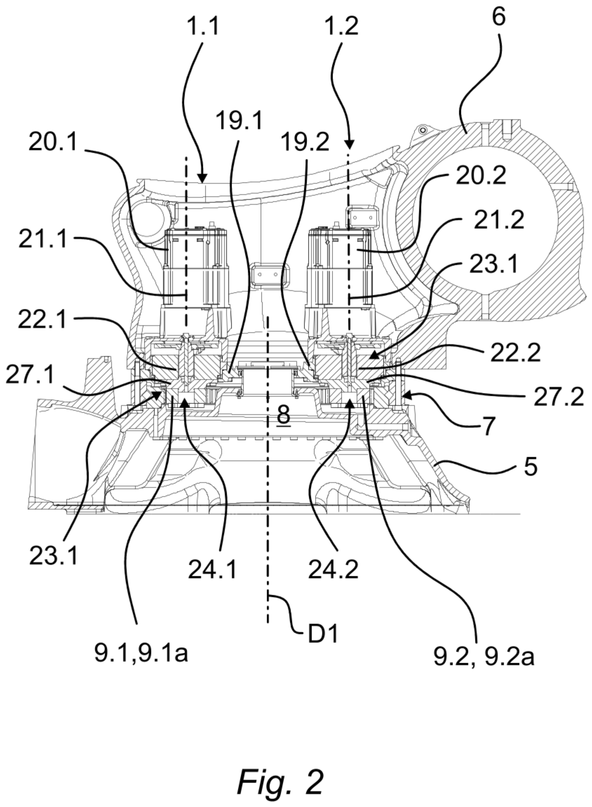

Das Karussell 6 ist an dem Grundgestell 5 um eine das erste Gelenk 4.1 des Roboterarms 2 bildende vertikale Drehachse D1 drehbar angetrieben gelagert, und zwar mittels eines Wälzlagers 7, eines Getriebes 8 und einer Antriebsvorrichtung 1, die im Falle des vorliegenden Ausführungsbeispiels einen ersten Antrieb 1.1 und einen zweiten Antrieb 1.2 umfasst, wie dies in Fig. 2 aufgezeigt ist.

Das Getriebe 8 weist wenigstens ein erstes Getriebeeingangsglied 9.1 auf, an das der erste Antrieb 1.1 angeschlossen ist und das Getriebe 8 weist wenigstens ein zweites Getriebeeingangsglied 9.2 auf, an das der zweite Antrieb 1.2 angeschlossen ist.

Sowohl das erste Getriebeeingangsglied 9.1 als auch das zweite Getriebeeingangsglied 9.2 kämmen mit einem gemeinsamen Abtriebsglied 10 des Getriebes 8, über das die von dem wenigstens einen ersten Antrieb 1.1 und dem wenigstens einen zweiten Antrieb 1.2 in das Getriebe 8 eingeleiteten Drehmomente gemeinsam in das erste Gelenk 4.1 eingeleitet werden, um das Karussell 6 relativ zum Grundgestell 5 zu bewegen.

Im Falle des vorliegenden Ausführungsbeispiels ist das Getriebe 8 als eine Stirnradstufe ausgebildet, aufweisend ein als Hohlrad 10a ausgebildetes Abtriebsglied 10, sowie ein das erste Getriebeeingangsglied 9.1 bildende erstes Ritzel 9.1a und ein das zweite Getriebeeingangsglied 9.2 bildende zweites Ritzel 9.2a, wobei sowohl das erste Ritzel 9.1a als auch das zweite Ritzel 9.2a mit dem gemeinsamen Hohlrad 10a in kämmenden Eingriff stehen.

Das Hohlrad 10a der Stirnradstufe des Getriebes 8 bildet in der dargestellten Ausführungsform gleichzeitig in einer einteiligen Ausführung einen Innenring 7.1 des Wälzlagers 7, welches das Hauptlager des ersten Gelenks 4.1 bildet, welches das Karussell 6 drehbar an dem Grundgestell 5 lagert.

Das Wälzlager 7, d.h. das Hauptlager kann beispielsweise ein Kreuzrollenlager sein, welches den Innenring 7.1 (Wälzlager-Innenring) und einen Außenring 7.2 (Wälzlager-Außenring), sowie zwischen dem Innenring 7.1 und dem Außenring 7.2 angeordnete Wälzrollen 7.3 aufweist.

Der Innenring 7.1 des Wälzlagers 7 kann, wie dargestellt, mit dem Grundgestell 5 verbunden sein und der Außenring 7.2 des Wälzlagers 7 kann, wie dargestellt, mit dem Karussell 6 verbunden sein.

Das Grundgestell 5 bildet eine untere Getriebegehäusehälfte 11a des Getriebes 8 und eine Bodenwand des Grundgestells 5 kann dabei, wie im konkreten Ausführungsbeispiel dargestellt, eine koaxial zur vertikalen Drehachse D1 des ersten Gelenks 4.1 angeordnete ringförmige Vertiefung 12 aufweisen, in welche das erste Ritzel 9.1a und das zweite Ritzel 9.2a von oben hineinragen und welche einen Aufnahmeraum für Getriebeöl bildet.

Das Getriebe 8 kann eine erste dynamische Dichtung 13.1 und einer zweite dynamische Dichtung 13.2 aufweisen, welche in vertikaler Richtung über dem Hohlrad 10a angeordnet sind.

Die erste dynamische Dichtung 13.1 und die zweite dynamische Dichtung 13.2 können in vertikaler Richtung über dem Wälzlager 7 angeordnet sein.

Die erste dynamische Dichtung 13.1 ist im Falle des vorliegenden Ausführungsbeispiels an einem Trägerring 14 ausgebildet, welcher zwischen dem Karussell 6 und dem Außenring 7.2 des Wälzlagers 7 zwischengefügt über beispielsweise mittels Schrauben 15 zusammengeschraubt sein kann. Die erste dynamische Dichtung 13.1 am Trägerring 14 kann somit gegen eine Dichtungsfläche am Innenring 7.1 des Wälzlagers 7 abdichten.

Die zweite dynamische Dichtung 13.2 dichtet im Falle des vorliegenden Ausführungsbeispiels einen Spalt zwischen der durch das Karussell 6 gebildeten oberen Getriebegehäusehälfte 11b des Getriebes 8 und einem Dom 16 des Grundgestells 5, das die untere Getriebegehäusehälfte 11a bildet, ab. Der Dom 16 oder ein mit dem Dom 16 verbundener Rohrstutzen 17 kann sich in vertikaler Richtung durch eine Öffnung 18 in der oberen Getriebegehäusehälfte 11b, d.h. durch das Karussell 6 hindurch nach oben erstrecken. Der Dom 16 oder der mit dem Dom 16 verbundene Rohrstutzen 17 weist dabei eine Außenmantelwand auf, die eine umlaufende Lauffläche für eine Dichtungslippe der zweiten dynamischen Dichtung 13.2 bildet. Die Öffnung 18 der oberen Getriebegehäusehälfte 11b ist dabei kreisförmig gestaltet und liegt koaxial zur Drehachse D1 des ersten Gelenks 4.1 des Roboterarm 2, also der Drehachse D1, um die das Karussell 6 relativ zum Grundgestell 5 dreht. An der umlaufenden Innenkante der Öffnung 18 im Karussell 6 kann ein Sitz ausgebildet sein, an dem beispielsweise ein Radialwellendichtring angebracht ist.

Das Karussell 6 bildet die obere Getriebegehäusehälfte 11b des Getriebes 8 und eine Deckenwand des Karussells 6 weist einen ersten Öffnungsflansch 19.1 auf, an dem der erste Antrieb 1.1 außerhalb des Getriebes 8 befestigt ist, derart, dass das mit dem ersten Antrieb 1.1 verbundene erste Getriebeeingangsglied 9.1 in das Getriebe 8 hineinragt. In gleicher Bauart weist die Deckenwand des Karussells 6 einen zweiten Öffnungsflansch 19.2 auf, an dem der zweite Antrieb 1.2 außerhalb des Getriebes 8 befestigt ist, derart, dass das mit dem zweiten Antrieb 1.2 verbundene zweite Getriebeeingangsglied 9.2 in das Getriebe 8 hineinragt.

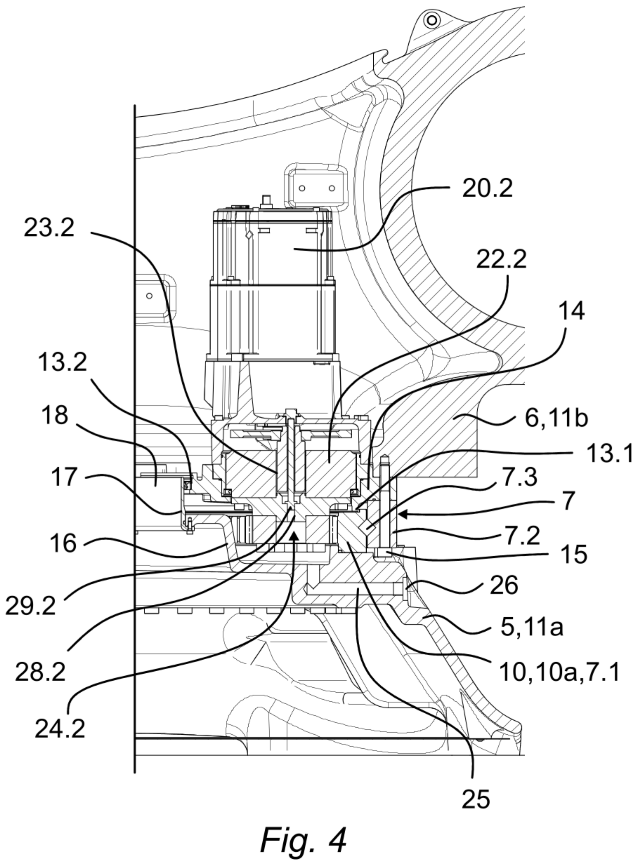

Wie insbesondere in Fig. 2 und in Fig. 4 dargestellt ist, kann im Falle des vorliegenden Ausführungsbeispiels der erste Antrieb 1.1 einen ersten Motor 20.1, insbesondere einen ersten elektrischen Motor, und ein erstes Vorstufengetriebe 22.1 aufweisen, welches die erste Motorwelle 21.1 des ersten Motors 20.1 unter Bereitstellung einer Übersetzung ins Langsame mit dem ersten Getriebeeingangsglied 9.1, d.h. dem ersten Ritzel 9.1a verbindet.

Ebenso weist im Falle des vorliegenden Ausführungsbeispiels der zweite Antrieb 1.2 einen zweiten Motor 20.2, insbesondere einen zweiten elektrischen Motor, und ein zweites Vorstufengetriebe 22.2 auf, welches die zweite Motorwelle 21.2 des zweiten Motors 20.2 unter Bereitstellung einer Übersetzung ins Langsame mit dem zweiten Getriebeeingangsglied 9.2, d.h. dem zweiten Ritzel 9.2a verbindet. Das erste Vorstufengetriebe 22.1 und das zweite Vorstufengetriebe 22.2 weisen dieselbe Übersetzung auf, d.h. das erste Vorstufengetriebe 22.1 und das zweite Vorstufengetriebe 22.2 sind vorzugsweise identisch ausgebildet.

Im Falle des vorliegenden Ausführungsbeispiels weist der erste Antrieb 1.1 eine erste hohle Antriebswelle 23.1 auf, welche das erste Getriebeeingangsglied 9.1 bzw. das erste Ritzel 9.1a trägt, wobei das erste Ritzel 9.1a als ein erstes hohles Getriebeeingangsglied 9.1 ausgebildet ist, derart, dass die erste hohle Antriebswelle 23.1 und das erste hohle Getriebeeingangsglied 9.1 einen ersten Fluidkanal 24.1 bilden, der mit einem Ölraum des Getriebes 8 in fluidischer Verbindung steht, so dass Getriebeöl über die erste hohle Antriebswelle 23.1 und das erste hohle Getriebeeingangsglied 9.1 hinweg in den Ölraum des Getriebes 8 einleitbar ist.

In gleicher Bauart weist der zweite Antrieb 1.2 eine zweite hohle Antriebswelle 23.2 auf, welche das zweite Getriebeeingangsglied 9.2 bzw. das zweite Ritzel 9.2a trägt, wobei auch das zweite Ritzel 9.2a als ein zweites hohles Getriebeeingangsglied 9.2 ausgebildet ist, derart, dass die zweite hohle Antriebswelle 23.2 und das zweite hohle Getriebeeingangsglied 9.2 einen zweiten Fluidkanal 24.2 bilden, der mit einem Ölraum des Getriebes 8 in fluidischer Verbindung steht, so dass Getriebeöl über die zweite hohle Antriebswelle 23.2 und das zweite hohle Getriebeeingangsglied 9.2 hinweg in den Ölraum des Getriebes 8 einleitbar ist.

Mittels des ersten Fluidkanals 24.1 und des zweiten Fluidkanals 24.2 kann das Getriebeöl des ersten Vorstufengetriebes 22.1 aus dem Ölraum des ersten Vorstufengetriebes 22.1 abgelassen werden, indem es zunächst in den Ölraum des Getriebes 8 (Hauptgetriebes) eingeleitet wird und von dort aus, beispielsweise zusammen mit dem Getriebeöl des Getriebes 8 über einen weiteren Ölablass des Getriebes 8, beispielsweise an dem Grundgestell 5 als untere Getriebegehäusehälfte 11a, gemeinsam abgelassen wird. Dazu kann ein Ölablasskanal 25 (Fig. 4) an der untere Getriebegehäusehälfte 11a den Ölablass bilden, der beispielsweise mit einer eigenen Ölablassschraube 26 verschließbar sein kann.

Demgemäß kann das jeweilige Vorstufengetriebe 22.1, 22.2, wie das Getriebe 8 (Hauptgetriebe) ebenfalls ölgeschmiert sein. Insoweit kann das jeweilige Vorstufengetriebe 22.1, 22.2 einen eigenen Ölraum aufweisen, der mit Vorstufengetriebeöl gefüllt sein kann.

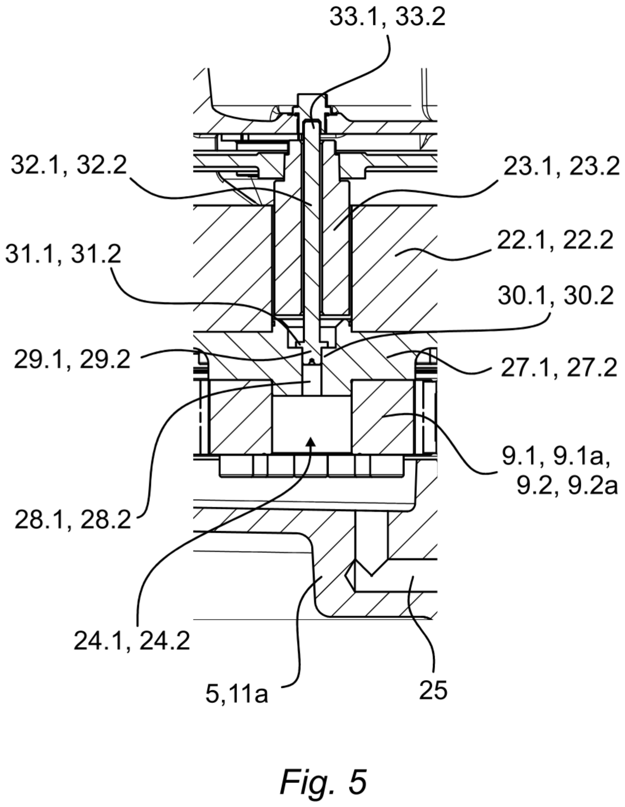

Wie insbesondere in der vergrößerten Darstellung der Fig. 5 zu erkennen ist, ist die erste hohle Antriebswelle 23.1 im Falle des vorliegenden Ausführungsbeispiels mit dem ersten hohlen Getriebeeingangsglied 9.1, d.h. mit dem ersten hohlen Ritzel 9.1a über ein erstes Trennstück 27.1 verbunden, insbesondere lediglich in fluidischer (nicht mechanischer) Verbindung, welches eine erste Durchlass-Gewindebohrung 28.1 für eine erste Ölablassschraube 29.1 aufweist, und die erste Ölablassschraube 29.1 weist einen ersten Gewindeabschnitt 30.1 auf, der ausgebildet ist zum Einschrauben der ersten Ölablassschraube 29.1 in die erste Durchlass-Gewindebohrung 28.1 des ersten Trennstücks 27.1, wobei die erste Ölablassschraube 29.1 an ihrem ersten Schraubenkopf 31.1 eine erste Verlängerung 32.1 aufweist, welche durch die erste hohle Antriebswelle 23.1 hindurch bis an ein oberes Stirnende der ersten hohlen Antriebswelle 23.1 geführt ist, wo die erste Verlängerung 32.1 ein erstes Betätigungsprofil 33.1 aufweist, das ausgebildet ist zum Aufschrauben und/oder Zuschrauben der ersten Ölablassschraube 29.1 an dem ersten Trennstück 27.1.

Anhand der Fig. 5 ist sowohl die erste hohle Antriebswelle 23.1 als auch die zweite hohle Antriebswelle 23.2 mit den entsprechenden Bezugszeichen erklärt.

Insoweit zeigt die Fig.5 auch die zweite hohle Antriebswelle 23.2, die mit dem zweiten hohlen Getriebeeingangsglied 9.2 über ein zweites Trennstück 27.2 verbunden ist, insbesondere lediglich in fluidischer (nicht mechanischer) Verbindung, welches eine zweite Durchlass-Gewindebohrung 28.2 für eine zweite Ölablassschraube 29.2 aufweist, und die zweite Ölablassschraube 29.2 einen zweiten Gewindeabschnitt 30.2 aufweist, der ausgebildet ist zum Einschrauben der zweiten Ölablassschraube 29.2 in die zweite Durchlass-Gewindebohrung 28.2 des zweiten Trennstücks 27.2, wobei die zweite Ölablassschraube 29.2 an ihrem zweiten Schraubenkopf 31.2 eine zweite Verlängerung 32.2 aufweist, welche durch die zweite hohle Antriebswelle 23.2 hindurch bis an ein oberes Stirnende der zweiten hohlen Antriebswelle 23.2 geführt ist, wo die zweite Verlängerung 32.2 ein zweites Betätigungsprofil 33.2 aufweist, das ausgebildet ist zum Aufschrauben und/oder Zuschrauben der zweiten Ölablassschraube 29.2 an dem zweiten Trennstück 27.2.

Das Wälzlager 7, das insbesondere als das Hauptlager des ersten Gelenks 4.1 ausgebildet ist, welches das Karussell 6 drehbar an dem Grundgestell 5 lagert, ist fettgeschmiert und gegen den Ölraum des Getriebes 8 abgedichtet.

## Patentansprüche

1. Roboterarm (2), aufweisend mehrere Glieder (3) und die Glieder (3) gegeneinander verstellbar verbindende Gelenke (4), wobei ein die kinematische Kette der Glieder (3) beginnendes erstes Glied (3.1) des Roboterarms (2) ein Grundgestell (5) des Roboterarms (2) bildet und ein dem Grundgestell (5) in der kinematischen Kette der Glieder (3) unmittelbar folgendes zweites Glied (3.2) ein Karussell (6) des Roboterarms (2) bildet und das Karussell (6) an dem Grundgestell (5) um eine das erste Gelenk (4.1) des Roboterarms (2) bildende vertikale Drehachse (D1) drehbar angetrieben gelagert ist, und zwar mittels eines Wälzlagers (7), eines Getriebes (8) und einer Antriebsvorrichtung (1), **dadurch gekennzeichnet, dass**
das Getriebe (8) wenigstens ein erstes Getriebeeingangsglied (9.1) aufweist, an das ein erster Antrieb (1.1) angeschlossen ist und wenigstens ein zweites Getriebeeingangsglied (9.2) aufweist, an das ein zweiter Antrieb (1.2) angeschlossen ist, wobei sowohl das erste Getriebeeingangsglied (9.1) als auch das zweite Getriebeeingangsglied (9.2) mit einem gemeinsamen Abtriebsglied (10) kämmen, über das die von dem wenigstens einen ersten Antrieb (1.1) und dem wenigstens einen zweiten Antrieb (1.2) in das Getriebe (8) eingeleiteten Drehmomente gemeinsam in das erste Gelenk (4.1) eingeleitet werden, um das Karussell (6) relativ zum Grundgestell (5) zu bewegen.

2. Roboterarm (2) nach Anspruch 1, **dadurch gekennzeichnet, dass** das Getriebe (8) als eine Stirnradstufe ausgebildet ist, aufweisend ein als Hohlrad (10a) ausgebildetes Abtriebsglied (10), sowie ein das erste Getriebeeingangsglied (9.1) bildende erstes Ritzel (9.1a) und ein das zweite Getriebeeingangsglied (9.2) bildende zweites Ritzel (9.2a), wobei sowohl das erste Ritzel (9.1a) als auch das zweite Ritzel (9.2a) mit dem gemeinsamen Hohlrad (10a) in kämmenden Eingriff stehen.

3. Roboterarm (2) nach Anspruch 2, **dadurch gekennzeichnet, dass** das Hohlrad (10a) der Stirnradstufe des Getriebes (8) einen Innenring (7.1) des Wälzlagers (7) mit ausbildet, welches das Hauptlager des ersten Gelenks (4.1) bildet, welches das Karussell (6) drehbar an dem Grundgestell (5) lagert.

4. Roboterarm (2) nach Anspruch 3, **dadurch gekennzeichnet, dass** der Innenring (7.1) des Wälzlagers (7) mit dem Grundgestell (5) verbunden ist und ein Außenring (7.2) des Wälzlagers (7) mit dem Karussell (6) verbunden ist.

5. Roboterarm (2) nach einem der Ansprüche 2 bis 4, **dadurch gekennzeichnet, dass** das Grundgestell (5) eine untere Getriebegehäusehälfte (11a) des Getriebes (8) bildet und eine Bodenwand des Grundgestells (5) eine koaxial zur vertikalen Drehachse (D1) des ersten Gelenks (4.1) angeordnete ringförmige Vertiefung (12) aufweist, in welche das erste Ritzel (9.1a) und das zweite Ritzel (9.2a) von oben hineinragen und welche einen Aufnahmeraum für Getriebeöl bildet.

6. Roboterarm (2) nach einem der Ansprüche 2 bis 5, **dadurch gekennzeichnet, dass** das Getriebe (8) wenigstens eine dynamische Dichtung (13.1, 13.2) oder eine Labyrinth-Dichtung aufweist, welche in vertikaler Richtung über dem Hohlrad (10a) angeordnet ist.

7. Roboterarm (2) nach einem der Ansprüche 2 bis 6, **dadurch gekennzeichnet, dass** das Getriebe (8) wenigstens eine dynamische Dichtung (13.1, 13.2) aufweist, welche in vertikaler Richtung über dem Wälzlager (7) angeordnet ist.

8. Roboterarm (2) nach einem der Ansprüche 1 bis 7, **dadurch gekennzeichnet, dass** der erste Antrieb (1.1) eine erste hohle Antriebswelle (23.1) aufweist, welche das erste Getriebeeingangsglied (9.1) trägt, wobei auch das erste Getriebeeingangsglied (9.1) als ein erstes hohles Getriebeeingangsglied (9.1) ausgebildet ist, derart, dass die erste hohle Antriebswelle (23.1) und das erste hohle Getriebeeingangsglied (9.1) einen ersten Fluidkanal (24.1) bilden, der mit einem Ölraum des Getriebes (8) in fluidischer Verbindung steht, so dass Getriebeöl über die erste hohle Antriebswelle (23.1) und das erste hohle Getriebeeingangsglied (9.1) hinweg in den Ölraum des Getriebes (8) einleitbar ist, und/oder der zweite Antrieb (1.2) eine zweite hohle Antriebswelle (23.2) aufweist, welche das zweite Getriebeeingangsglied (9.2) trägt, wobei auch das zweite Getriebeeingangsglied (9.2) als ein zweites hohles Getriebeeingangsglied (9.2) ausgebildet ist, derart, dass die zweite hohle Antriebswelle (23.2) und das zweite hohle Getriebeeingangsglied (9.2) einen zweiten Fluidkanal (24.2) bilden, der mit einem Ölraum des Getriebes (8) in fluidischer Verbindung steht, so dass Getriebeöl über die zweite hohle Antriebswelle (23.2) und das zweite hohle Getriebeeingangsglied (9.2) hinweg in den Ölraum des Getriebes (8) einleitbar ist.

9. Roboterarm (2) nach Anspruch 8, **dadurch gekennzeichnet, dass** die erste hohle Antriebswelle (23.1) mit dem ersten hohlen Getriebeeingangsglied (9.1) über ein erstes Trennstück (27.1) verbunden ist, welches eine erste Durchlass-Gewindebohrung (28.1) für eine erste Ölablassschraube (29.1) aufweist, und die erste Ölablassschraube (29.1) einen ersten Gewindeabschnitt (30.1) aufweist, der ausgebildet ist zum Einschrauben der ersten Ölablassschraube (29.1) in die erste Durchlass-Gewindebohrung (28.1) des ersten Trennstücks (27.1), wobei die erste Ölablassschraube (29.1) an ihrem ersten Schraubenkopf (31.1) eine erste Verlängerung (32.1) aufweist, welche durch die erste hohle Antriebswelle (23.1) hindurch bis an ein oberes Stirnende der ersten hohlen Antriebswelle (23.1) geführt ist, wo die erste Verlängerung (32.1) ein erstes Betätigungsprofil (33.1) aufweist, das ausgebildet ist zum Aufschrauben und/oder Zuschrauben der ersten Ölablassschraube (29.1) an dem ersten Trennstück (27.1), und/oder die zweite hohle Antriebswelle (23.2) mit dem zweiten hohlen Getriebeeingangsglied (9.2) über ein zweites Trennstück (27.2) verbunden ist, welches eine zweite Durchlass-Gewindebohrung (28.2) für eine zweite Ölablassschraube (29.2) aufweist, und die zweite Ölablassschraube (29.2) einen zweiten Gewindeabschnitt (30.2) aufweist, der ausgebildet ist zum Einschrauben der zweiten Ölablassschraube (29.2) in die zweite Durchlass-Gewindebohrung (28.2) des zweiten Trennstücks (27.2), wobei die zweite Ölablassschraube (29.2) an ihrem zweiten Schraubenkopf (31.2) eine zweite Verlängerung (32.2) aufweist, welche durch die zweite hohle Antriebswelle (23.2) hindurch bis an ein oberes Stirnende der zweiten hohlen Antriebswelle (23.2) geführt ist, wo die zweite Verlängerung (32.2) ein zweites Betätigungsprofil (33.2) aufweist, das ausgebildet ist zum Aufschrauben und/oder Zuschrauben der zweiten Ölablassschraube (29.2) an dem zweiten Trennstück (27.2).

10. Roboterarm (2) nach einem der Ansprüche 1 bis 9, **dadurch gekennzeichnet, dass** das Wälzlager (7), insbesondere als das Hauptlager des ersten Gelenks (4.1), welches das Karussell (6) drehbar an dem Grundgestell (5) lagert, fettgeschmiert ist und gegen einen Ölraum des Getriebes (8) abgedichtet ist.

11. Roboterarm (2) nach einem der Ansprüche 1 bis 10,
**dadurch gekennzeichnet, dass** das Karussell (6) eine obere Getriebegehäusehälfte (11b) des Getriebes (8) bildet und eine Deckenwand des Karussells (6) einen ersten Öffnungsflansch (19.1) aufweist, an dem der erste Antrieb (1.1) außerhalb des Getriebes (8) befestigt ist, derart, dass das mit dem ersten Antrieb (1.1) verbundene erste Getriebeeingangsglied (9.1) in das Getriebe (8) hineinragt, und/oder die Deckenwand des Karussells (6) einen zweiten Öffnungsflansch (19.2) aufweist, an dem der zweite Antrieb (1.2) außerhalb des Getriebes (8) befestigt ist, derart, dass das mit dem zweiten Antrieb (1.2) verbundene zweite Getriebeeingangsglied (9.2) in das Getriebe (8) hineinragt.

12. Roboterarm (2) nach Anspruch 11, **dadurch gekennzeichnet, dass** zwischen dem ersten Antrieb (1.1) und dem ersten Öffnungsflansch (19.1) eine erste Einstellvorrichtung zwischengefügt ist, welche ausgebildet ist zum Einstellen der relativen Lage der Drehachse des ersten Getriebeeingangsglieds (9.1) bezüglich des Drehachse (D1) des Abtriebsglieds (10) des Getriebes (8), und/oder zwischen dem zweiten Antrieb (1.2) und dem zweiten Öffnungsflansch (19.2) eine zweite Einstellvorrichtung zwischengefügt ist, welche ausgebildet ist zum Einstellen der relativen Lage der Drehachse des zweiten Getriebeeingangsglieds (9.2) bezüglich des Drehachse (D1) des Abtriebsglieds (10) des Getriebes (8).

13. Roboterarm (2) nach einem der Ansprüche 1 bis 12,
**dadurch gekennzeichnet, dass** der erste Antrieb (1.1) einen ersten Motor (20.1), insbesondere einen ersten elektrischen Motor (20.1), und ein erstes Vorstufengetriebe (22.1) aufweist, welches die erste Motorwelle (21.1) des ersten Motors (20.1) unter Bereitstellung einer Übersetzung ins Langsame mit dem ersten Getriebeeingangsglied (9.1) verbindet, und/oder der zweite Antrieb (1.2) einen zweiten Motor (20.2), insbesondere einen zweiten elektrischen Motor (20.2), und ein zweites Vorstufengetriebe (22.2) aufweist, welches die zweite Motorwelle (21.2) des zweiten Motors (20.2) unter Bereitstellung einer Übersetzung ins Langsame mit dem zweiten Getriebeeingangsglied (9.2) verbindet.
